# EUROPEAN PATENT SPECIFICATION

(11) **EP 2 520 870 B1**
(45) Date of publication and mention of the grant of the patent: **05.03.2014**
(21) Application number: 09812437.3
(22) Date of filing: 29.12.2009
(51) Int. Cl.: F24J 2/52, E04B 2/90, F24J 2/04

(54) **PASSIVE SOLAR COLLECTOR MODULE FOR BUILDING ENVELOPE**
PASSIVES SONNENKOLLEKTOR-MODUL FÜR GEBÄUDEHÜLLE
MODULE COLLECTEUR SOLAIRE PASSIF POUR ENVELOPPES DE BÂTIMENT

(43) Date of publication of application: 07.11.2012
(73) Proprietor: FUNDACIÓN TECNALIA RESEARCH & INNOVATION, 20009 San Sebastian (Guipuzcoa) (ES)
(72) Inventor: AMUNDARAIN SUAREZ, Aitor, E-48160 Vizcaya (ES); CAMPOS DOMINGUEZ,Jose María, E-48160 Vizcaya (ES); CHICA PÁEZ, Jose Antonio, E-48160 Vizcaya (ES); MENO IGLESIAS, Sandra, E-48160 Vizcaya (ES); URIARTE ARRIEN, Amaia, E-48160 Vizcaya (ES); GARAY MARTÍNEZ, Roberto, E-48160 Vizcaya (ES); HERRERO RUIZ, Julio Cesar, E-48160 Vizcaya (ES); OLIVER RIPS, Marc, E-48160 Vizcaya (ES); PÉREZ BARCENILLA, Sergio, E-48160 Vizcaya (ES); ELGUEZABAL ESNARRIAGA, Peru, E-48160 Vizcaya (ES); ROMERO AMORRORTU, Ander, E-48160 Vizcaya (ES); APRAIZ EGAÑA, Inés, E-48160 Vizcaya (ES)
(74) Representative: Carpintero Lopez, Francisco
(86) International application number: PCT/ES2009/070636
(87) International publication number: WO 2011/080356

(56) References cited:
- DE-A1- 3 004 364
- DE-U1- 29 504 791
- FR-A1- 2 538 882

## Description

### Technical Field of the Invention

The present invention is comprised in the technical field of passive solar collectors with ventilation systems for outer building envelopes.

### Background of the Invention

In view of the increasing energy costs and the need to reduce emissions occurring in power generation and in consumption of fossil fuels caused by the need to reduce environmental impacts, there is today a significant tendency to use "green" technologies which use solar energy in many sectors including the construction sector in which, among other systems, passive solar collectors installed in the façades of newly constructed buildings and in already existing buildings are increasingly used.

The passive solar collectors installed in the façades of buildings are usually formed by an element which absorbs/accumulates solar radiation, and a transparent glass or plastic element which allows the passage of shortwave solar radiation but blocks the long-wave radiation emitted by the absorbing/accumulating element. This radiation heats the air contained in the chamber located between the absorbing element and the transparent element (greenhouse effect), the circulation of said air into the room being allowed. In addition to this effect, there is a transfer of heat by conduction through the storing element and which is subsequently radiated into the enclosed space. Passive solar collectors are understood as those in which the fluid transmitting the heat (in this case, air) is not circulated to other rooms of the building by means of pumps for its use but rather it is directly injected into the building for its heating or cooling. In order to manage ventilation in passive solar collectors there are systems based on different ventilation patterns such as, for example, the Trombe wall, the parietodynamic wall, the ventilated façade, the solar chimney, the solar wall and passive cooling by means of night ventilation.

Patent US-7077124-B2 describes a thermal solar collector with heat storage capacity, integrated in façade walls, and proposes several functional solutions starting from one and the same passive solar collector concept. The proposed system consists of a transparent layer, an absorbing layer (which could be mobile) and an accumulator (sheet with capsules filled with phase changing materials). Furthermore, it contemplates the possibility of incorporating photovoltaic energy generation systems. The solutions proposed in this patent do not contemplate the integration of the system in buildings of more than one story. On the other hand, the entrance of the air heated by the collector into the room is not detailed and it is not contemplated that its operation allows the circulation and hearing of the inner air since the system only sucks in air from the exterior and its correct operation therefore depends on the outer wind conditions and on the pressures occurring in the façade in opposition to the inner conditions of the compartment. Likewise, the inertia of the system described in this patent is limited according to the amount of phase changing material which the capsules can contain, this being able to cause a large thickness of the complete system in the event of needing a large thermal, since the thermal mass of the existing wall is not used. Several of the functional solutions set forth in this patent consider the use of a spring in charge of moving the absorbent layer (with large dimensions and weight) without taking into account the problems that this can cause. Finally, its use for cooling the room in summer seasons is not possible.

Patent US-4237865-A1 describes a solar heating panel with a system regulated by a complex system of 6 flaps, the operation, control and maintenance of which can cause functional problems and problems for the user. Likewise, its use in cooling or the use of the thermal inertia of the closure for heating or cooling the interior room is not contemplated, therefore the use of this type of system is limited to tertiary buildings (offices, schools, libraries, etc.). This is due to the low heat storage capacity of the system, which provides an immediate absorption and use of the solar radiation. The consumption patterns of residential buildings differs from those proposed by the system described in this patent.

Spanish patent application ES-2173010-A1 describes a passive air conditioning system for heating (Trombe wall with phase changing materials) and cooling spaces (solar chimney). This system does not provide insulation and does not clarify the integration of the system in buildings of more than one story. In the case of cooling of spaces, the existence of openings in the compartment in the northern façade is necessary, with the limitations that this would cause (both in residential and tertiary buildings) air currents which can give rise to discomfort situations for the users who are inside the compartment.

French patent applications FR-2538882-A1 describes an air conditioning installation for premises based on the Trombe wall concept which shows the control logic of an air conditioning system which uses this type of collector. According to two setpoint temperatures, the controller governs a system of four flaps operated by actuators and in charge of modifying the air currents which condition the air of the reference compartment. Nevertheless, features of the flaps or of the actuators are not described. The installation has a single functionality for the system (Trombe wall), which involves certain limitations such as, for example, air renewals through the system itself. The use of only two setpoint temperatures is limited. Likewise, the integration of the system in buildings of more than one story is not described.

Patent US-4471758-A has a solar panel for buildings which, following the ventilation patterns of the Trombe wall, proposes a passive solar collector without storage, using the thermal inertia of the enclosure. This would be suitable for, as mentioned above, for tertiary buildings and its use as a residential is dismissed. This patent considers a single functionality for the system (Trombe wall) with the limitations that this has (limitation in the air renewals through the system itself). The convection inside the air chamber is forced, with the problems that this can cause. The integration of the system in buildings of several stories is not justified either.

Patent US-4442827 describes a heat solar collector based on the ventilation patterns of the Trombe wall. It describes a passive solar collector without storage, using the thermal inertia of the enclosure. This would be suitable for tertiary buildings and its use as a residential is dismissed. This patent considers a single functionality for the system (Trombe wall) with the limitations that this has (limitation in the air renewals through the system itself). The general character of the proposed system is aimed at covering surfaces of a limited size with a certain finish (aesthetic/decorative effect). Likewise, the system is not aimed at large façade surfaces and does not solve the problems which can occur in the areas of the façade corresponding to floor slab edges. The cost of the system can have restrictions for its application in façades of a large size, especially considerable when the transparent outer panel has a wavy shape.

Patent US-424804 describes a passive solar collector formed by elements which rotate to facilitate the control of the radiation and the convection of the storing element towards the outer environment and towards the inner façade, and maximize the insulation provided by the passive solar collector. The rotation system of these elements is complex and difficult to maintain, especially for high buildings. The useful space which is not used for installing these systems is a restriction to its use.

Japanese patent application JP-7166615 describes an energy saving panel based on the Trombe wall concept the integration of which in a system in buildings of more than one story is not contemplated. The single functionality corresponds to that of the Trombe wall with the limitations that this would involve, such as for example, with respect to the air renewals through the system itself.

It must be emphasized, together with the specific drawbacks inherent in the systems based on solar collectors specified above, that these systems have the common drawback that they are not capable of adapting to several of the most usual operation modes, using one and the same basic and simple structure.

### Description of the Invention

The object of the present invention is to overcome the drawbacks of the state of the art. The invention is starting from document FR2538882A1, which discloses a passive solar collector module for building envelopes with
- a transparent outer panel (14) and a heat absorbing panel (13) are separated from one another by an air chamber (15) through which an air flow flows;
- an upper air conduit (17) for communicating the air chamber (15) with an area close to the ceiling of an inner closed space of a building;
- a lower air conduit (16) for communicating the air chamber (15) with an area close to the floor of an inner closed space of a building;
- an environmental air inlet (12) in the lower part of the module and a heated air outlet (at flap "C") in the upper part of the module, both communicated with the chamber (15);
wherein the module comprises
- a first air directing system (B, C) arranged and operable such that in a first position it blocks the air outlet (at flap "C") leaving the air chamber (15) communicated with the upper air conduit (17), and in a second position it blocks the upper air conduit (17) leaving the air chamber (15) communicated with the air outlet (at flap "C");
- a second air directing system (A) arranged and operable such that in a first position it blocks the lower air conduit (16) and in a third position it does not block either the lower air conduit (16) or the air flow towards the air outlet (at flap "C").

In order to overcome the drawbacks of the state of the art the present invention suggests
- a frame (3) comprising an upper crosspiece (23a), a lower crosspiece (23b) and respective side struts (24);
- that the transparent outer panel (1) and the heat absorbing panel (2) are assembled in the frame (3);
- that the second air directing system (14) is arranged and operable such that in a second position it blocks the air flow towards the air outlet (18).

The modules according to the invention and the solar collectors formed by such modules must be installed in the opaque areas of the façades irradiated by the sun. These are the east, west façades and mainly the south façade.

The air outlet can be a front horizontal outlet groove which can be located in the upper crosspiece of the frame. In this case, the first directing system can be comprised by a first three-way valve based on a roller with an inner T-shaped cavity rotating in a first horizontal housing in which the outlet groove and the upper air conduit end.

As used in this specification, the term "absorbing panel" means any planar element comprising or consisting of a material for absorbing and, where appropriate, storing heat energy. Such element can be, for example, a plate of such material, a coating of said material fixed to a support, etc.

In turn, the air inlet can also be a front horizontal inlet groove which can be located in the lower crosspiece. The second directing system can be housed in a lower crosspiece or, preferably in an intermediate crosspiece of the frame. In the latter case, the transparent outer panel can be comprised by two parts: a first part between the intermediate crosspiece and the upper crosspiece, and a second part between the intermediate crosspiece and the lower crosspiece, in which the environmental air inlet is then located.

In an embodiment of the invention, the first directing system can also adopt a third position and the second directing system can adopt a fourth position such that they respectively blocks the outlet and the inlet of the air chamber such that the air contained in the air chamber remains immobile inside it, thus configuring what is known as a "solar wall".

Therefore, the directing system can be comprised by a second three-way valve in the form of a roller with an inner T-shaped cavity rotating in a second horizontal housing in which the lower air conduit ends. Thus, when the second three-way valve is housed in the intermediate crosspiece, the latter is separated from the air inlet whereas when the three-way valve is housed in the lower crosspiece, the lower air conduit and the air inlet end in that housing.

When the frame comprises the mentioned intermediate crosspiece the module uses the entire radiation received by the system in the entire façade surface due to the fact that the module also covers the floor slab area in which there are solar energy absorption systems.

The three-way valves can be operated, for example, by means of small electric motors controlled by a system which positions the valves according to the temperatures at different points of the system (three thermocouples).

In the event that it was necessary, for example due to extreme climates, it is possible to place an insulation element, such as a coating in the rear face of the absorbing panel in the same wall of the building.

According to what is inferred from that set forth above, the present invention is very versatile insofar as it allows managing ventilation in passive solar collectors formed by an absorbing/accumulating element and another transparent element. The different ventilation patterns with which the system proposed herein can act correspond to the operation modes of several of the most usual passive solar collectors such as the Trombe wall, the parietodynamic wall (allowing air renewals), the ventilated façade, the solar chimney, the solar wall, passive cooling by means of night ventilation and combinations of the above. Thus, the operation modes in any of these modes allow adapting to the outer environmental conditions and to the needs of the use.

On the other hand, its modularity and light weight makes the present invention an effective solution for the energetic rehabilitation of façades of existing buildings. Likewise, the present invention solves the integration of the previous passive solar collectors for buildings of several stories, allowing the use of the entire façade surface for storing heat. At the same time, the system provides sufficient insulation for meeting the demands of the user and minimizing heating and cooling expenses.

The invention is suitable for both the energetic rehabilitation of already existing buildings and in new constructions. In the event of its use in new story buildings, a hybrid system formed by the invention set forth herein in combination with an enclosure panel which can be supported in the floor slabs must suitably be installed. The system is designed to be used in both residential and tertiary (offices, schools, etc.) buildings with an unlimited number of stories. In the case of rehabilitation, the effect on the user is minimum, such user being able to continue occupying the building susceptible of such operation.

All the elements forming the modules must be assembled in the factory and subsequently the assembly is installed on site. The dimensions of the assembly can be adjusted to the characteristics of any building since it has the flexibility of adapting to any height between floor slabs. Likewise, the system provides total flexibility in making ventilation conduits due to the fact that they can be made in the façade at the height established as optimal.

It must be reiterated that the present invention has the additional advantage that all the elements forming the modules can be assembled in the factory to subsequently be installed on site. The dimensions of the assembly must be adjusted to the characteristics of the building on which the system is installed. This allows the flexible industrialization of the invention.

### Brief Description of the Drawings

Aspects and embodiments of the invention are described below based on several drawings, in which
Figure 1 is a schematic side sectional schematic view of an embodiment of parts of respective modules according to the present invention;

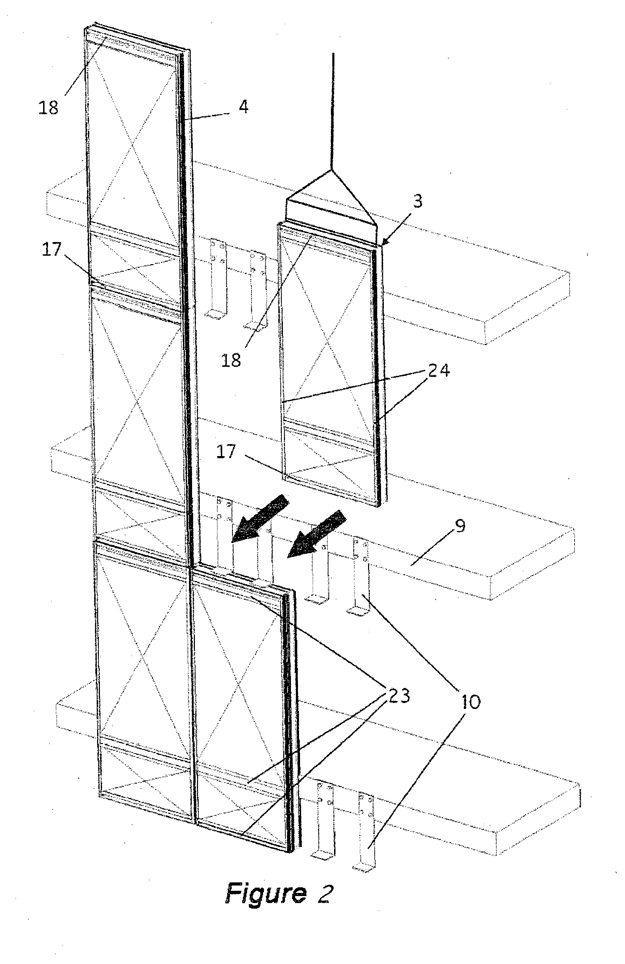

Figure 2 is a schematic view showing how the modules illustrated in Figure 1 are installed, using the floor slab of the building;
Figure 3 schematically shows various operation patterns of the module illustrated in Figure 1;

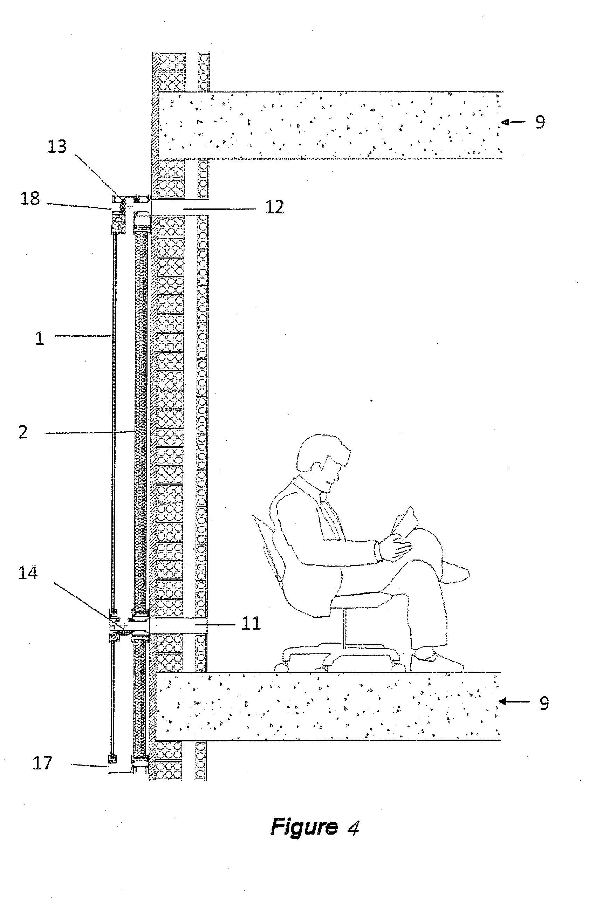

Figure 4 is a schematic view of a complete module corresponding to Figure 1.

In these figures there are reference numbers identifying the following elements:
- 1: transparent outer panel
- 2: absorbing panel
- 3: frame
- 4: joint
- 5: inner sheet
- 6: air chamber
- 7: outer sheet
- 8: mortar leveling
- 9: floor slab
- 10: system of anchors
- 11: upper air conduit
- 12: lower air conduit
- 13: first roller
- 14: second roller
- 15: air chamber of the module
- 16: additional insulation layer
- 17: air inlet
- 18: air outlet
- 19: wedge
- 20: system of removable covers
- 21: system of joints
- 22: blind system
- 23: crosspiece
- 23a: upper crosspiece
- 23b: lower crosspiece
- 23c: intermediate crosspiece
- 24: strut
- 25: existing façade

### Embodiments of the Invention

According to the embodiment of the invention illustrated in the figures, the passive solar collector module comprises a transparent outer panel -1-and an absorbing panel -2- separated from one another by an air chamber - 15-, and an insulation panel -16- placed against the rear part of the absorbing panel -2-.

The panels -1-, -2-, -16- are assembled in a frame -3- comprising extruded aluminium or PVC profiles forming crosspieces -23- and struts -24-. The crosspieces -23- transmit the load of the assembly to the struts -24-. The various modules form a passive solar collector intended for the energetic rehabilitation of a façade -25- formed by an inner sheet -5-, an air chamber - 6-, an outer sheet -7- and a mortar leveling -8-. The position of the floor slab - 9- is also depicted in these figures. A system of anchors -10- fixes the ventilation management system together with the passive solar collector to the façade -25-, making them hang at the outer part thereof. The adjacent modules are joined to one another by means of joints -4- arranged on the outer sides of the frame -3- and which are in charge of maintaining the cohesion between two adjacent modules both vertically and horizontally.

The transparent outer panel -1- can be made of plastic or glass and its thermal characteristics affect the heat losses occurring in the assembly. The selection of the transparent outer panel -1- is conditioned by the climate of the place in which the system is installed and of those of the closed space to be heated/cooled. On the other hand, the transparent outer panel -1- is supported in a wedge -19- which rests longitudinally in the frame 3 and the mission of which is to absorb manufacture, assembly and operation tolerances. In turn, a system of removable covers -20- allows the maintenance of transparent outer panel -1-, of the absorbing panel -2- and of the insulating panel -16- in those cases in which it is necessary. A system of joints -21- is in charge of exerting the pressure on the removable covers -20- and of providing sufficient air, wind and water tightness to assure a safe operation of the system.

The air exchange between the interior of the closed space, the exterior and the air chamber -15- of each module of the passive solar collector is carried out respectively through an upper air conduit -11- close to the ceiling of the closed space and a lower air conduit -12- close to the floor of the closed space arranged in boreholes made in the façade -25-. The height of the conduits -11-, -12- with respect to the position of the floor slab can vary according to the architectural needs, contributing to the flexibility of the system. This is achieved by increasing the size of the elements forming the solar collector in the area of the floor slab edge. The section of the two conduits -11- and -12- must be the optimal one for allowing the circulation of an air flow sufficient to assure a correct operation of the system. In certain cases, such as for example in the case of the energetic rehabilitation of an existing façade -25-, in which the façade -25- has a very large thickness, the ventilation in the air chamber -15- formed between the transparent panel -1- and the absorbing panel -2- can be forced by means of placing a fan in the upper air conduit -11- the operation of which is reversible, being able to introduce or remove air from the interior of the compartment.

These air conduits -11-, -12-, for example, cylindrical or prismatic, are manufactured in a material capable of supporting the load of the sheets -5-, - 7- forming the façade and prevent the heat loss towards the air chamber -6-of the façade -25-. The boring of the façade -25- is the only one of the operations for installing the system which can cause discomfort to the users inside the building, which users do not necessarily have to vacate the building during the rehabilitation process. The rest of the assembly operations can be completely carried out from the exterior of the building.

The two air conduits -11-, -12- must, in the case of the energetic rehabilitation of a façade, be made to allow the operation of the system but the distance between these conduits -11-, -12- does not have to be fixed, such that the architect has a certain freedom of design, since a part of the module extends from the upper part of the upper air conduit -11- close to the ceiling to the conduit -12- close to the floor and the second part of the module extends from the conduit -12- to the conduit -11-. The conduit -12- is, therefore, defined between the two parts forming the module, whereas the conduit -11- is formed in the upper part of the module. Thus, the complete module extends from the part immediately above the conduit -11- to the conduit -11- of the upper story.

The upper crosspiece -23a- comprises an air outlet -18- in the form of a horizontal groove whereas the lower crosspiece -23b- comprises an air inlet -17- also in the form of a groove. The air inlet -17- and the air outlet -18-are communicated with the air chamber -15- of the module.

The upper crosspiece -23a- houses a first air flow directing system formed by a first roller -13- adopting the form of a first three-way valve with an inner passage with a T-shaped section and rotating in a first housing in which the outlet groove -18- and the upper air conduit -11- end. This first roller -13- is arranged such that upon rotating it can adopt positions in which it selectively blocks the air outlet -18- leaving the air chamber -15-communicated with the upper air conduit -11-, blocks the upper air conduit - 11- leaving the air chamber -15- communicated with the air outlet -18- or blocks the movement of air in the chamber -15-. In turn, the intermediate crosspiece -23c- houses a second air flow directing system formed by a second roller -14- adopting the form of a second three-way with an inner passage with a T-shaped section and rotating in a second housing. This second roller -13- is arranged such that upon rotating it can adopt positions in which it selectively blocks the lower air conduit -12- or the air inlet -17-, or leaves both the lower air conduit -12- and the air inlet -17- unblocked.

The air conduits -11-, -12- are affected by a constriction in the area of the profiles due to the need to reduce the dimension of the rollers -13- and - 14-, and therefore, the amount of aluminium or PVC seen from the exterior of the building.

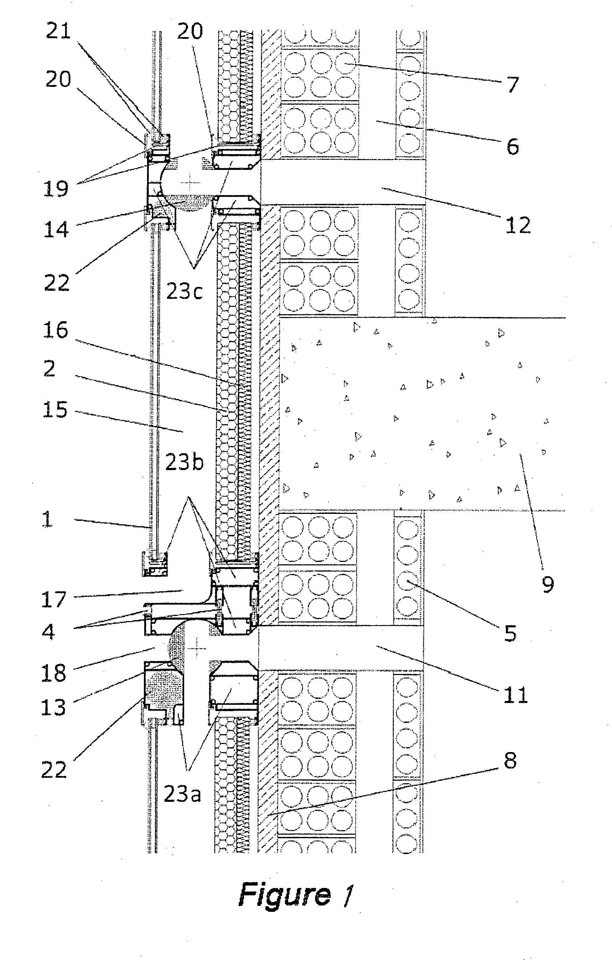

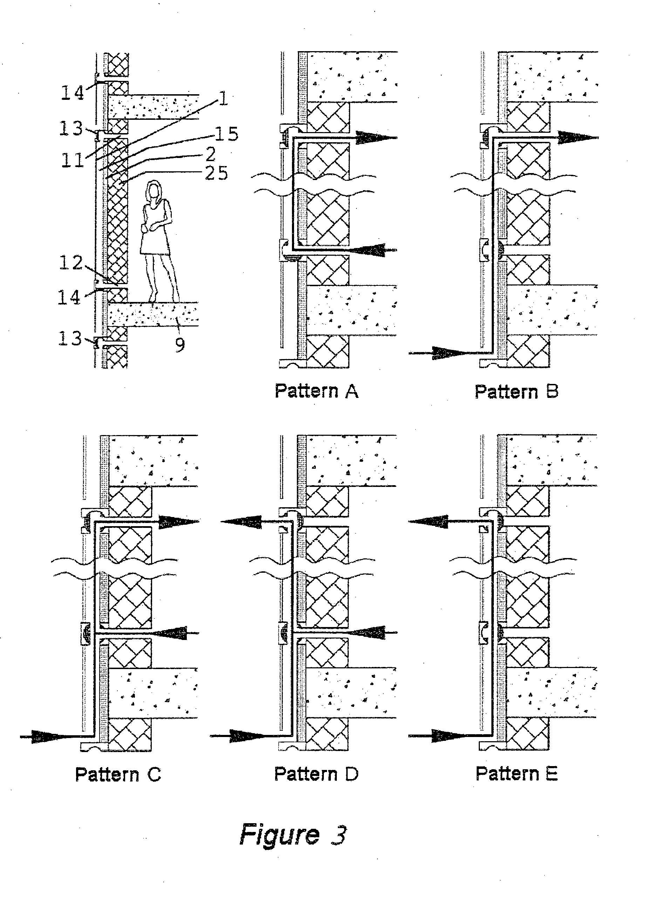

Depending on the positions adopted by the rollers -13, -14- operated, for example, by respective small electric motors (not shown in the figures), different ventilation patterns can be carried out (see Figure 3), such as for example:
- Pattern A: It is a ventilation pattern in which the air inlet -17- and the air outlet -18- are respectively blocked by the first roller and the second roller, corresponding to the Trombe module. The hot air inside the chamber -15- enters inside the building through the conduit -11-. This hot air is in turn replaced by colder air entering the chamber -15-through the conduit -12-.
- Pattern B: According to this pattern, the first roller -13- blocks the air outlet -18- whereas the second roller -14- blocks the air conduit -12-such that the hot air inside the chamber -15- enters inside the building through the conduit -11-. This hot air is in turn replaced by colder air entering the chamber -15- through the air inlet -17-. This ventilation pattern corresponds to the parietodynamic wall.
- Pattern C: According to said pattern, the first roller -13- blocks the air outlet -18- whereas the second roller -14- does not block the air conduit -12- such that the hot air inside the chamber -15- enters inside the building through the conduit -11-. This hot air is in turn replaced by colder air entering the chamber -15- through the air inlet -17- and through the conduit -12-.
- Pattern D: It is a ventilation pattern corresponding to the solar chimney concept. According to this pattern, the first roller -13- blocks the upper air conduit -11- whereas the second roller -14- does not either block the air inlet -17- or the lower air conduit -12-. The air enter the chamber -15- through the air inlet -17-, is heated in the chamber -15- and, due to the lift power of heated air, sucks the air from the interior of the closed space, Venturi effect, through the lower air conduit, a fresh air current from cooler areas of the building (northern façade) being produced.
- Pattern E: Ventilation pattern corresponding to the ventilated façade concept. According to this pattern, the first roller -13- blocks the upper air conduit -11- whereas the second roller -14- does not block the air inlet -17- but does block the lower air conduit -12-. Thus, the air enters the chamber -15- through the air inlet -17-, is heated in the chamber - 15- and leaves through the air outlet -18-, heating a heat storing element which can be integrated in the absorbing panel -2-. Necessarily, in this case, the transparent outer panel -1- must be susceptible of being opacified in those time intervals in which the intention is on one hand to reduce heat losses of the storing element (night use of the heat stored during the day in winter following Patterns A, B and C) or on the other hand to prevent the irradiation of the absorbing panel 2 (Pattern E corresponding to ventilated façade in summer). There are several ways to achieve this objective such as, for example, the uses or electrochromic glasses, thermochromic glasses, of dispersed liquid crystal, etc. or in the simplest case, a system of blinds -22-, preferably coated with low emissivity, as shown in Figure 1.

Pattern A can be used to cool the room when an accumulator with phase changing materials is used. This is possible when the phase changing temperature of said material is below the temperature inside the closed space to be cooled. In that case, the position of the rollers -13- and -14- is identical to the one shown in pattern A but the circulation of air is the opposite to the one defined therein.

The patterns mentioned herein and which are shown in Figure 3 are the most common in the field of bioclimatic architecture. Another patterns must be mentioned which is not shown herein due to its limited use and which is known as solar wall, in which the air contained in the air chamber-15- remains immobile inside it. This is achieved by means of the suitable positioning of the rollers -13- and -14-.

## Claims

1. Passive solar collector module for building envelopes with
a frame (3) comprising an upper crosspiece (23a), a lower crosspiece (23b) and respective side struts (24);
a transparent outer panel (1) and a heat absorbing panel (2), separated from one another by an air chamber (15) through which an air flow flows and assembled in the frame (3);
an upper air conduit (11) for communicating the air chamber (15) with an area close to the ceiling of an inner closed space of a building;
a lower air conduit (12) for communicating the air chamber (15) with an area close to the floor of an inner closed space of a building;
an environmental air inlet (17) in the lower part of the module and a heated air outlet (18) in the upper part of the module, both communicated with the chamber (15);
wherein the module comprises
a first air directing system (13) arranged and operable such that in a first position it blocks the air outlet (18) leaving the air chamber (15) communicated with the upper air conduit (11), and in a second position it blocks the upper air conduit (11) leaving the air chamber (15) communicated with the air outlet (18);
a second air directing system (14) arranged and operable such that in a first position it blocks the lower air conduit (12), in a second position it blocks the air flow towards the air outlet (18) and in a third position it does not block either the lower air conduit (12) or the air flow towards the air outlet (18).

2. Module according to claim 1, **characterized in that** the air outlet is a front horizontal outlet groove (18).

3. Module according to claim 1 or 2, **characterized in that** the air inlet is a front horizontal inlet groove (17).

4. Module according to claim 2 or 3, **characterized in that** the outlet groove (18) is located in the upper crosspiece (23a).

5. Module according to claim 2, 3 or 4, **characterized in that** the first directing system comprises a first three-way valve (13) in the form of a roller with a inner T-shaped cavity rotating in a first horizontal housing in which the outlet groove (18) and the upper air conduit (11) end.

6. Module according to any one of the previous claims, **characterized in that** the frame (3) comprises an intermediate crosspiece (23c) housing the second directing system (14).

7. Module according to claim 6, **characterized in that** the first directing system (13) comprises a second three-way valve (14) in the form of a roller with an inner T-shaped cavity rotating in a second horizontal housing in which the lower air conduit (12) ends and is separated from the air inlet (17).

8. Module according to claim 6 or 7, **characterized in that** the transparent outer panel (1) is formed by a first part assembled between the intermediate crosspiece (23c) and the upper crosspiece (23a) and a second part assembled between the intermediate crosspiece (23c) and the lower crosspiece (23b).

9. Module according to one of claims 3-4, **characterized in that** the second directing system (14) is housed in the lower crosspiece (23b).

10. Module according to claim 9, **characterized in that** the first directing system comprises a three-way valve (14) in the form of a roller with an inner T-shaped cavity rotating in a second horizontal housing in which the lower air conduit (12) and the air inlet (17) end.

11. Module according to one of the previous claims, **characterized in that** the air inlet (17) is located in the lower crosspiece (23b) of the frame (3).

12. Module according to one of the previous claims, **characterized in that** the first directing system is arranged and is operable to adopt a third position in which it blocks the air outlet of the air chamber (15) and the second directing system is arranged and is operable to adopt a fourth position in which it blocks the air outlet of the air chamber (15), such that the air contained in the air chamber (15) remains immobile inside it.

## Patentansprüche

1. Passives Sonnenkollektor-Modul für Gebäudehülle mit einem Rahmen (3) umfassend einen oberen Querträger (23a), einen unteren Querträger (23b) und einzelne Seitenstreben (24);
eine transparente Außenplatte (1) und eine wärmeabsorbierende Platte (2), getrennt voneinander durch eine Luftkammer (15), durch die ein Luftstrom strömt, und die im Rahmen (3) montiert sind;
eine obere Luftleitung (11) für die Verbindung zur Luftkammer (15) mit einer Fläche nahe der Decke eines inneren geschlossen Raumes eines Gebäudes;
eine untere Luftleitung (12) für die Verbindung zur Luftkammer (15) mit einer Fläche nahe dem Boden eines inneren geschlossenen Raumes eines Gebäudes;
ein Umweltlufteinlass (17) im unteren Teil des Moduls und ein Warmluftaustritt (18) im oberen Teil des Moduls, beide stehen in Verbindung mit der Kammer (15);
wobei das Modul umfasst
ein erstes Luftleitsystem (13) angeordnet und derart betreibbar, dass in einer ersten Position der Luftaustritt (18) blockiert wird, so dass die Luftkammer (15) in Verbindung mit der oberen Luftleitung (11) steht, und in einer zweiten Position die obere Luftleitung blockiert (11) wird, so dass die Luftkammer (15) die in Verbindung mit dem Luftaustritt (18) steht;
ein zweites Luftleitsystem (14) angeordnet und derart betreibbar, dass in einer ersten Position die untere Luftleitung (12) blockiert wird, in einer zweiten Position der Luftstrom in Richtung des Luftaustritts (18) blockiert wird und in einer dritten Position weder die untere Luftleitung (12) noch den Luftstrom in Richtung des Luftaustritts (18) blockiert werden.

2. Modul nach Anspruch 1, **dadurch gekennzeichnet, dass** der Luftaustritt eine vordere horizontale Auslassnut (18) ist.

3. Modul nach Anspruch 1 oder 2, **dadurch gekennzeichnet, dass** der Lufteinlass eine vordere horizontale Einlassnut (17) ist.

4. Modul nach Anspruch 2 oder 3, **dadurch gekennzeichnet, dass** die Auslassnut (18) sich im oberen Querträger (23a) befindet.

5. Modul nach Anspruch 2,3 oder 4, **dadurch gekennzeichnet, dass** das erste Leitsystem ein erstes 3-Wege-Ventil (13) umfasst in Form einer Rolle mit einem inneren T-geformten Hohlraum, drehbar in einem ersten horizontalen Gehäuse, in welches die Auslassnut (18) und die obere Luftleitung (11) enden.

6. Modul nach einem der vorgenannten Ansprüche, **dadurch gekennzeichnet, dass** der Rahmen (3) einen Zwischenquerträger (23c) zur Unterbringung eines zweiten Leitsystems (14) umfasst.

7. Modul nach Anspruch 6, **dadurch gekennzeichnet, dass** das erste Leitsystem (13) ein zweites 3-Wege-Ventil (14) in Form einer Rolle mit einem inneren T-geformten Hohlraum umfasst, drehbar in einem zweiten horizontalen Gehäuse, in welches die untere Luftleitung (12) endet und vom Lufteinlass (17) getrennt wird.

8. Modul nach Anspruch 6 oder 7, **dadurch gekennzeichnet, dass** die transparente Außenplatte (1) aus einem erstes Teil, montiert zwischen dem Zwischenquerträger (23c) und dem oberen Querträger (23a), und einem zweiten Teil, montiert zwischen dem Zwischenquerträger (23a) und dem unteren Querträger (23b), gebildet wird.

9. Modul nach einem der Ansprüche 3 - 4, **dadurch gekennzeichnet, dass** das zweite Leitsystem (14) sich im unteren Querträger (23b) befindet.

10. Modul nach Anspruch 9, **dadurch gekennzeichnet, dass** das erste Leitsystem ein 3-Wege-Ventil (14) in der Form einer Rolle mit einem inneren T-geformten Hohlraum umfasst, drehbar in einem zweiten horizontalen Gehäuse, in welches die untere Luftleitung (12) und der Lufteinlass (17) enden.

11. Modul nach einem der vorgenannten Ansprüche, **dadurch gekennzeichnet, dass** sich der Lufteinlass (17) im unteren Querträger (23b) des Rahmens (3) befindet.

12. Modul nach einem der vorgenannten Ansprüche, **dadurch gekennzeichnet, dass** das erste Leitsystem angeordnet und betreibbar ist, eine dritte Position anzunehmen, in welcher es den Luftaustritt der Luftkammer (15) blockiert, und das zweite Leitsystem angeordnet und betreibbar ist, eine vierte Position anzunehmen, in welcher der Luftaustritt der Luftkammer (15) blockiert ist, so dass die Luft die in der Luftkammer (15) innendrin unbeweglich bleibt.

## Revendications

1. Module collecteur solaire passif pour enveloppes de bâtiment avec :
un châssis (3) comprenant une traverse supérieure (23a), une traverse inférieure (23b) et des entretoises latérales (24) respectives ;
un panneau externe transparent (1) et un panneau d'absorption de chaleur (2), séparés l'un de l'autre par une chambre à air (15) à travers laquelle un écoulement d'air s'écoule et assemblés dans le châssis (3) ;
un conduit d'air supérieur (11) pour faire communiquer la chambre à air (15) avec une zone proche du plafond d'un espace interne clos d'un bâtiment ;
un conduit d'air inférieur (12) pour faire communiquer la chambre à air (15) avec une zone proche du plancher d'un espace interne clos d'un bâtiment ;
une entrée d'air environnemental (17) dans la partie inférieure du module et un conduit d'air chauffé (18) dans la partie supérieure du module, les deux en communication avec la chambre (15) ;
dans lequel le module comprend :
un premier système de direction d'air (13) agencé et pouvant fonctionner de sorte que dans une première position, il bouche la sortie d'air (18) sortant de la chambre à air (15) en communication avec le conduit d'air supérieur (11) et dans une deuxième position, il bouche le conduit d'air supérieur (11) sortant de la chambre à air (15) en communication avec la sortie d'air (18) ;
un second système de direction d'air (14) agencé et pouvant fonctionner de sorte que dans une première position, il bouche le conduit d'air inférieur (12), dans une deuxième position, il empêche l'écoulement d'air vers la sortie d'air (18) et dans une troisième position il ne bouche pas le conduit d'air inférieur (12) et n'empêche pas non plus l'écoulement d'air vers la sortie d'air (18).

2. Module selon la revendication 1, **caractérisé en ce que** la sortie d'air est une rainure de sortie horizontale avant (18).

3. Module selon la revendication 1 ou 2, **caractérisé en ce que** l'entrée d'air est une rainure d'entrée horizontale avant (17).

4. Module selon la revendication 2 ou 3, **caractérisé en ce que** la rainure de sortie (18) est positionnée dans la traverse supérieure (23a).

5. Module selon la revendication 2, 3 ou 4, **caractérisé en ce que** le premier système de direction comprend une première valve à trois voies (13) se présentant sous la forme d'un rouleau avec une cavité interne en forme de T tournant dans un premier logement horizontal dans lequel la rainure de sortie (18) et le conduit d'air supérieur (11) arrivent.

6. Module selon l'une quelconque des revendications précédentes, **caractérisé en ce que** le châssis (3) comprend une traverse intermédiaire (23c) longeant le second système de direction (14).

7. Module selon la revendication 6, **caractérisé en ce que** le premier système de direction (13) comprend une seconde valve à trois voies (14) se présentant sous la forme d'un rouleau avec une cavité interne en forme de T tournant dans un second boîtier horizontal dans lequel le conduit d'air inférieur (12) arrive et est séparé de l'entrée d'air (17).

8. Module selon la revendication 6 ou 7, **caractérisé en ce que** le panneau externe transparent (1) est formé par une première partie assemblée entre la traverse intermédiaire (23c) et la traverse supérieure (23a) et une seconde partie assemblée entre la traverse intermédiaire (23c) et la traverse inférieure (23b).

9. Module selon l'une des revendications 3 à 4, **caractérisé en ce que** le second système de direction (14) est logé dans la traverse inférieure (23b).

10. Module selon la revendication 9, **caractérisé en ce que** le premier système de direction comprend une valve à trois voies (14) se présentant sous la forme d'un rouleau avec une cavité interne en forme de T tournant dans un second boîtier horizontal dans lequel le conduit d'air inférieur (12) et l'entrée d'air (17) arrivent.

11. Module selon l'une des revendications précédentes, **caractérisé en ce que** l'entrée d'air (17) est positionnée dans la traverse inférieure (23b) du châssis (3).

12. Module selon l'une des revendications précédentes, **caractérisé en ce que** le premier système de direction est agencé et peut fonctionner pour adopter une troisième position dans laquelle il bouche la sortie d'air de la chambre à air (15) et le second système de direction est agencé et peut fonctionner pour adopter une quatrième position dans laquelle il bouche la sortie d'air de la chambre à air (15) de sorte que l'air contenu dans la chambre à air (15) reste immobile à l'intérieur de cette dernière.
